# EUROPÄISCHE PATENTANMELDUNG

(11) **EP 2 282 176 A1**
(43) Veröffentlichungstag der Anmeldung: **09.02.2011**
(21) Anmeldenummer: 10007293.3
(22) Anmeldetag: 14.07.2010
(51) Int. Cl.: G01D 4/00, H04L 12/28, H04L 29/08

(54) **Verfahren und System zum Darstellen von Informationen über den Energieverbrauch**

(30) Priorität: 14.07.2009 DE 102009033245
(71) Anmelder: Power Plus Communications AG, 68167 Mannheim (DE)
(72) Erfinder: Mayer, Eugen, 69305 Mannheim (DE); Wagner, Janosch, 97486 Königsberg (DE)
(74) Vertreter: Ullrich & Naumann

(57) **Zusammenfassung**

Ein Verfahren zum Darstellen von Informationen über den Energieverbrauch eines Nutzers, ist im Hinblick auf eine Bereitstellung von aktuellen Verbrauchsinformationen mit geringem Aufwand gekennzeichnet durch die Schritte: Auslesen eines elektronischen Stromzählers (2, 3) bei dem Nutzer zum Ermitteln von Daten über den Energieverbrauch, Übermitteln der Daten über den Energieverbrauch an einen Energiedaten-Server (5), Übermitteln der durch den Energiedaten-Server (5) empfangenen Daten an einen zweiten Server (6) und Aufbereiten der Daten durch den zweiten Server (6) und Übermitteln der aufbereiteten Daten an ein Endgerät (7) bei dem Nutzer und Darstellen der aufbereiteten Daten auf dem Endgerät (7), wobei das Auslesen des Stromzählers (2, 3) mit einer einstellbaren Häufigkeit erfolgt und wobei die Häufigkeit des Auslesens in Abhängigkeit eines durch den Nutzer gewählten Anzeigeszenariums eingestellt wird. Ein entsprechendes System ist angegeben.

## Beschreibung

Die Erfindung betrifft ein Verfahren und ein System zum Darstellen von Informationen über den Energieverbrauch eines Nutzers.

In der Praxis gibt es verschiedene Ansätze, Endverbrauchern Informationen über den Energieverbrauch zur Verfügung zu stellen. Hierbei kommen verstärkt elektronische Systeme zum Einsatz, bei denen ein elektronischer Stromzähler, meist ein sogenannter Smart-Meter, über eine Kommunikationsverbindung ausgelesen wird. Der Stromzähler misst den Energieverbrauch und übermittelt die Daten elektronisch an den Energieversorger oder die Daten werden vom Energieversorger aus elektronisch abgefragt. Die Übermittlung der Daten erfolgt meist über den Hausanschluss unter Verwendung von PLC (PowerLine Communication), d.h. die Daten werden auf die normalen Stromleitungen moduliert und über den Hausanschluss zum Energieversorger übertragen. Das Auslesen des Zählers und Übermitteln der Daten an den Backend-Server erfolgt üblicherweise periodisch. Als praktikabel hat sich ein Intervall von 15 min erwiesen. Der Gesetzgeber sieht vor, die Daten allen Kunden zur Verfügung zu stellen, um durch eine verbesserte Transparenz den Stromverbrauch zu reduzieren.

Für die Anzeige sind aus der Praxis prinzipiell zwei Technologien gebräuchlich. Bei einer ersten Technologie werden die Verbrauchsdaten auf einer Webseite dargestellt. Der Endkunde kann sich üblicherweise an einem Webserver einloggen und danach seinen Energieverbrauch über eine Webseite betrachten und kontrollieren. Häufig erfolgt die Darstellung der Verbrauchsdaten in grafischer Form, beispielsweise mittels Verbrauchsdiagramme. Hierfür werden historische Werte in grafischer Form aufbereitet und dem Kunden auf einer Webseite dargestellt. Häufig wird dem Nutzer die Möglichkeit geboten, Diagramme über den Tages-, Monats- oder Jahresverbrauch anzusehen.

Nachteilig ist, dass die Informationen über den Energieverbauch prinzipbedingt nur mit einer geringen zeitlichen Auflösung und nur mit einer nicht unerheblichen Verzögerung dem Kunden angezeigt werden. Viele der aus der Praxis bekannten Systeme ermöglichen lediglich eine Anzeige von Daten, die schon mehrere Stunden alt sind. Der Energieverbrauch ist durch die fehlende Aktualität nicht gut nachvollziehbar, da der Nutzer üblicherweise nicht protokolliert, wann einzelne Geräte in Betrieb sind. Hierdurch fällt es schwer, Geräte mit hohem Energieverbrauch zu identifizieren und den Verbrauch nachhaltig zu reduzieren.

Bei einer zweiten aus der Praxis bekannten Technologie erfolgt die Anzeige der Verbrauchswerte auf einem Display im Haus, einem sogenannten Inhouse-Display. Daten über den Energieverbrauch werden dafür in regelmäßigen Abständen zu Abrechnungszwecken an den Energieversorger und zur Darstellung zu dem Display übertragen. Die empfangenen Daten werden auf dem Display als Tagesverbrauch dargestellt. Die Darstellung der Verbrauchsdaten erfolgt meist als Zahlenwert, seltener in grafischer Form. Die Daten können tendenziell aktueller sein als bei der erstgenannten Technologie, da die Verbrauchsdaten häufiger ausgelesen werden können.

Nachteilig bei diesen Systemen ist, dass spezielle Zähler mit zwei Schnittstellen benötigt werden: Eine Schnittstelle zum Display und eine weitere für die Remote-Auslesung durch den Energieversorger. Die zusätzliche Schnittstelle erhöht die Kosten für den Stromzähler unverhältnismäßig. Display und Zähler müssen zudem aufeinander abgestimmt sein, so dass der Austausch eines Zählers gegen ein anderes Produkt häufig den Austausch des Displays mit sich zieht. Darüber hinaus sind die Displays meist relativ teuer und unflexibel. Technisch betrachtet ist es kaum möglich, Software-Updates auf die Displays zu installieren. Ein weiterer Nachteil ist, dass auf den Displays keine externen Informationen angezeigt werden können, wie beispielweise der Verbrauch einer Vergleichsgruppe, Wetterinformationen oder andere vergleichbare Daten. Im Ergebnis bieten diese Systeme zwar relativ aktuelle Verbrauchsinformationen und somit einen zeitnahen Überblick über den Energieverbrauch eines Nutzers, sind jedoch teuer und unflexibel.

Der vorliegenden Erfindung liegt daher die Aufgabe zugrunde, ein Verfahren und ein System zum Darstellen von Informationen über den Energieverbrauch derart auszugestalten und weiterzubilden, dass dem Nutzer aktuelle Daten über den Energieverbrauch mit geringem Aufwand und zu geringen Kosten angezeigt werden können. Erfindungsgemäß wird die voranstehende Aufgabe durch die Merkmale des Anspruchs 1 gelöst. Danach ist das in Rede stehende Verfahren gekennzeichnet durch die Verfahrensschritte: Auslesen eines elektronischen Stromzählers bei dem Nutzer zum Ermitteln von Daten über den Energieverbrauch, Übermitteln der Daten über den Energieverbrauch an einen Energiedaten-Server, Übermitteln der durch den Energiedaten-Server empfangenen Daten an einen zweiten Server und Aufbereiten der Daten durch den zweiten Server und Übermitteln der aufbereiteten Daten an ein Endgerät bei dem Nutzer und Darstellen der aufbereiteten Daten auf dem Endgerät, wobei das Auslesen des Stromzählers mit einer einstellbaren Häufigkeit erfolgt und wobei die Häufigkeit des Auslesens in Abhängigkeit eines durch den Nutzer gewählten Anzeigeszenariums eingestellt wird.

In vorrichtungsmäßiger Hinsicht ist die voranstehende Aufgabe durch die Merkmale des Anspruchs 10 gelöst. Danach umfasst das in Rede stehende System einen elektronischen Stromzähler zum Erfassen von Daten über den Energieverbrauch des Nutzers, ein Gateway, das zum Auslesen von Daten aus dem Stromzähler und zum Weiterleiten von Daten in ein vorzugsweise breitbandiges Netzwerk ausgestaltet ist, einen Energiedaten-Server, der zum Empfangen der von dem Gateway weitergeleiteten Daten ausgebildet ist, einen zweiten Server, der zum Empfangen der bei den Energiedaten-Server empfangenen Daten und zum Aufbereiten der von dem Energiedaten-Server empfangenen Daten ausgestaltet ist, und ein Endgerät, das zum Darstellen der durch den zweiten Server aufbereiteten Daten ausgestaltet ist, wobei die Häufigkeit des Auslesens des Stromzählers in Abhängigkeit eines von dem Nutzer gewählten Anzeigeszenariums einstellbar ist.

Erfindungsgemäß ist zunächst erkannt worden, dass eine kontinuierliche Echtzeitablesung eines Stromzählers, d.h. ein Auslesen des Stromzählers mit kurzen Intervallen in Sekundenbereich, nicht technisch sinnvoll erfolgen kann. Hierdurch würden erhebliche Datenmengen entstehen, die schwer zu handhaben wären. Zum einen müsste eine große Datenmenge über die Datenverbindung zwischen Stromzähler und Energiedaten-Server übertragen werden, zum anderen müsste die große Datenmenge auf dem Energiedaten-Server geeignet verarbeitet werden. So müssten die Daten für eine gewisse Zeit, beispielsweise für die vergangenen zwei Stunden, zur Darstellung durch den Nutzer bereitgehalten werden. Die Kosten für die notwendige Infrastruktur wären beträchtlich. Allerdings kann auf eine hohe Auslesefrequenz kaum verzichtet werden, da nur auf diese Weise ein zeitnahes und detailliertes Bild über den Energieverbrauch gewonnen werden kann.

Erfindungsgemäß ist ferner erkannt worden, dass durch Verwendung eines bedarfsgerechten Auslesens dennoch ein günstiges System erzielt werden kann und nicht auf eine hohe Aktualität und zeitnahe Darstellung von Verbrauchsinformationen verzichtet werden muss. Es kann vielmehr ein leistungsfähiges und kostengünstiges System erzielt und der Konflikt zwischen einer zu hohen Datenmenge und einer ausreichenden Aktualität gelöst werden. Hierzu wird ein elektronischer Stromzähler bei dem Nutzer ausgelesen, um Daten über den Energieverbrauch des Nutzers zu ermitteln. Das Ermitteln und Auslesen des Energieverbrauchs erfolgt in einer aus der Praxis bekannten Art und Weise. Die derart gewonnenen Daten werden an einen Energiedaten-Server übermittelt. Die durch den Energiedaten-Server empfangenen Daten werden wiederum an einen zweiten Server weitergeleitet und dort in geeigneter Weise aufbereitet. Die aufbereiteten Daten werden einem Endgerät bei dem Nutzer zur Verfügung gestellt und können dort dargestellt werden. Aus der Art des verwendeten Endgeräts ergibt sich, wie die von dem Energiedaten-Server empfangenen Daten aufbereitet werden müssen, damit sie auf dem Endgerät dargestellt werden können.

Dem Nutzer werden mindestens zwei Anzeigeszenarien angeboten, für die jeweils Auslesehäufigkeiten hinterlegt sind. Der Nutzer wählt ein gewünschtes Anzeigeszenarium aus. Je nach ausgewähltem Anzeigeszenarium erfolgt das Auslesen des Stromzählers mit der hinterlegten Auslesehäufigkeit. Auf diese Weise werden Daten immer in der Menge generiert, wie sie für das jeweilige Anzeigeszenarium benötigt werden, wodurch sich die zu übertragende und zu verarbeitende Datenmenge auf ein Minimum reduzieren. Damit kann auf verblüffend einfache Art und Weise die Datenmenge erheblich reduziert werden, wodurch sich die Kosten zum Betreiben des Verfahrens bzw. die Kosten des Systems im Rahmen halten lassen.

In vorteilhafter Weise können die Daten über den Energieverbrauch durch den Energiedatenserver von dem Stromzähler abgefragt werden (Poll). Auf diese Weise kann die Auslesehäufigkeit sehr einfach durch den Energiedaten-Server kontrolliert und vorgegeben werden. Eine Konfigurationsfähigkeit der Ausleseinfrastruktur bei dem Nutzer bezüglich der Auslesehäufigkeit muss nicht vorliegen. Auf diese Weise kann das erfindungsgemäße Verfahren ohne Veränderungen der Infrastruktur bei dem Nutzer angewandt werden.

Alternativ können die Daten über den Energieverbrauch ohne explizite Anfrage an den Energiedatenserver gesandt werden (Push). Hierzu liest ein üblicherweise in der Ablesestruktur vorhandenes Gateway den Stromzähler aus und sendet die Daten an den Energiedaten-Server. Das Gateway sollte hierzu über eine Möglichkeit verfügen, hinsichtlich der Auslesehäufigkeit konfiguriert zu werden. In Abhängigkeit dieser Konfiguration würde das Gateway den Stromzähler auslesen und die Daten an den Energiedatenserver übermitteln.

Vorzugsweise erfolgt bei beiden Möglichkeiten das Übermitteln der Daten periodisch. Die Daten werden mit einer Periodenlänge T übermittelt, so dass bei dem Energiedaten-Server mit einem zeitlichen Abstand von T Messwerte über den Energieverbrauch vorliegen.

Polling und Pushing können aber auch kombiniert werden. So könnte das Gateway den Zähler mit einer ersten Periodenlänge auslesen und die Daten periodisch an den Energiedaten-Server übermitteln. Eine mögliche erste Periodenlänge ist bspw. 15 Minuten. Wenn bei Wechsel des Anzeigeszenariums ein kürzeres Ausleseintervall notwendig ist, könnte der Energiedaten-Server die fehlenden Daten abfragen. Die per Push und Poll erhaltenen Daten werden dann durch den Energiedaten-Server geeignet kombiniert.

Zum Erzielen einer möglichst umfassenden Verwertbarkeit der Daten könnte der Energiedaten-Server eine Aufbereitung der empfangenen Daten durchführen. Diese Aufbereitung kann in dem Ablegen der empfangenen Daten in einer Datenbank bestehen. Vorteilhafter Weise werden die empfangenen und ggf. aufbereiteten Daten bei dem Energiedaten-Server abgespeichert. Üblicherweise wird das Abspeichern auf einer Festplatte erfolgen, auf die der Energiedaten-Server Zugriff hat. Die auf diese Weise gespeicherten Verbrauchsdaten können durch den Energieversorger für Abrechnungszwecke verwendet werden.

Unter den durch den Benutzer auswählbaren Anzeigeszenarien befindet sich vorzugsweise ein Standard-Anzeigeszenarium, in dem Daten mit einer Periodenlänge von mehr als einer Minute ausgelesen werden. Die Periodenlänge ist vorzugsweise kleiner als 30 min. Ein Kompromiss zwischen Datenmenge und Aktualität in der Standardanzeige stellt eine Periodenlänge zwischen 10 min und 20 min. dar. Als ganz besonders geeignet hat sich eine Periodenlänge von 15 min erwiesen, die recht häufig bei den elektronischen Auslesesystemen verwendet wird.

Ein anderes Anzeigeszenarium, das dem Benutzer vorzugsweise zur Auswahl angeboten wird, beinhaltet ein Echtzeit-Anzeigeszenarium. Der Begriff "Echtzeit" bedeutet in diesem Zusammenhang, dass dem Nutzer möglichst zeitnah der jeweils aktuelle Energieverbrauch angezeigt wird. Hierzu werden Daten mit einer Periodenlänge von weniger als einer Minute ausgelesen und mit geringer zeitlicher Verzögerung dem Benutzer dargestellt. Bevorzugter Weise kommen Periodenlängen zwischen 1 Sek. und 10 Sek. zum Einsatz. Limitierend ist im Allgemeinen die Leistungsfähigkeit der Ausleseinfrastruktur, d.h. des Zählers, des ggf. vorhandenen Gateways und der Datenverbindung zwischen Stromzähler/Gateway und Energiedaten-Server. Hieraus wird sich ein minimal mögliches Ausleseintervall ergeben. Das Ausleseintervall kann auch unterhalb von 1 Sek. liegen.

Hinsichtlich einer möglichst einfachen Infrastruktur erhält der Energiedaten-Server Informationen über das ausgewählte Anzeigeszenarium von dem zweiten Server. Das Endgerät des Nutzers kommuniziert mit dem zweiten Server, der dadurch Informationen über die gewünschten Daten und das gewünschte Anzeigenszenarium erhält. Zur Vermeidung einer unnötigen Kommunikation zwischen Energiedaten-Server und Endgerät kann der zweite Server die Anforderungen direkt an den Energiedaten-Server weiterleiten. Demnach sendet der zweite Server nach Initüerung eines neuen Anzeigeszenariums entsprechende Informationen an den Energiedaten-Server und veranlasst auf diese Art und Weise die Konfiguration der Übermittlung der Daten von dem Stromzähler. Im Nachgang hierzu wird die Übermittlung mit der für das jeweilige Anzeigeszenarium hinterlegten Periodenlänge konfiguriert und die Daten mit der entsprechenden Periodenlänge ausgelesen und an den Energiedaten-Server übermittelt. Die auf diese Weise gewonnenen, für das gewählte Anzeigeszenarium relevanten Daten werden an den zweiten Server übermittelt und nach einer Aufbereitung an das Endgerät des Nutzers weitergeleitet. Vorzugsweise beinhaltet die Aufbereitung der Daten durch den zweiten Server eine Umwandlung der Daten in eine grafische Darstellung. So können beispielsweise die numerisch vorhandenen Verbrauchsdaten in ein Verbrauchsdiagramm umgewandelt werden. Beim Aufbau des Diagramms können Vorgaben des Nutzers berücksichtigt werden. So könnte ein Nutzer eine Darstellung wünschen, bei dem der Verlauf des Energieverbrauchs in den vergangenen 30 min. dargestellt ist. Entsprechend könnte der zweite Server sämtliche in den vergangenen 30 min bei dem zweiten Server empfangenen Daten in einem Diagramm darstellen.

Bei Wechsel eines Anzeigeszenariums können die Daten aus dem zuvor gewählten Anzeigeszenarium als Startdarstellung gewählt werden, die nach und nach durch die neuen Werte angepasst wird. So könnten beispielsweise bei Wechsel von einem Standard- zu einem Echtzeit-Anzeigeszenarium zunächst die Verbrauchswerte aus dem Standard-Anzeigeszenarium dargestellt werden, die nach und nach durch die Echtzeitdarstellung verfeinert und aktualisiert werden.

Neben einer grafischen Darstellung kann jedoch auch eine numerische Darstellung erfolgen, die zwar im Vergleich zu der grafischen Darstellung eine geringere Nachvollziehbarkeit des Verlaufs bietet. Allerdings lassen sich durch eine numerische Darstellung direktere Rückschlüsse auf den aktuellen Energieverbrauch ziehen. Bevorzugt ist jedoch eine grafische Darstellung.

Generell müssen der Energiedaten-Server und der zweite Server nicht als separate reale oder virtuelle Maschinen implementiert sein. Vielmehr könnte der zweite Server auch in dem Energiedaten-Server integriert sein oder umgekehrt.

In einer Ausgestaltung der Erfindung ist der zweite Server ein Web-Server, der Webseiten für ein Endgerät des Benutzers zur Verfügung stellt. Die Webseiten werden vorzugsweise dynamisch generiert oder enthalten dynamische Inhalte, nämlich sich ändernden Verbrauchsdiagrammen, Zahlendarstellungen oder dergleichen. In dieser Ausgestaltung kann das Endgerät ein Computer, ein Smartphone, ein Tablet-Computer oder dgl. umfassen. Als Endgerät geeignet sind prinzipiell alle Geräte, die Webseiten empfangen und darstellen können. Dadurch ist die vorliegende Erfindung äußerst umfangreich und universell einsetzbar.

Das Starten eines Echtzeit-Anzeigeszenariums kann durch Anklicken eines Links für eine Anzeige in Echtzeit erfolgen. Ruft der Nutzer in diesem Ausführungsbeispiel eine entsprechende Seite auf, generiert der zweite Server eine Anfrage an den Energiedaten-Server, wonach nachfolgend Daten mit einer - für diesen Anwendungsbereich - sehr hohen Häufigkeit abgerufen werden. Der Energiedaten-Server sendet darauf ein Konfigurationsdaten an das Gateway/den Stromzähler und initiiert ein Senden von Daten mit sehr kurzem Intervall. Alternativ fragt der Energiedaten-Server mit der entsprechenden Häufigkeit den Zählerstand ab. Die durch den Energiedaten-Server danach empfangenen Daten werden an den zweiten Server weitergeleitet und zur Darstellung bei dem Endgerät aufbereitet. Das Echtzeit-Anzeigeszenarium wird wieder verlassen, sobald die entsprechende Seite verlassen wird.

Eine alternative Möglichkeit zum Aufrufen eines Anzeigeszenariums im Zusammenhang mit einer webbasierten Darstellung besteht in dem Klicken eines Buttons. So könnte auf der Webseite ein Button vorgesehen sein, nach dessen Betätigung der zweite Server das Echtzeit-Anzeigeszenarium initiiert. Das Verfahren verläuft danach entsprechend dem zuvor geschilderten Ausführungsbeispiel.

In einer anderen Ausgestaltung des Endgerätes könnte dieses durch eine TV-Box gebildet sein, die mit einem Fernsehgerät verbunden ist. Die TV-Box ist über eine Direktverbindung mit dem zweiten Server verbunden und bereitet die von dem zweiten Server empfangenen Daten für eine Darstellung auf dem Fernsehgerät auf. Ein entsprechendes System ist in einer parallel anhängigen Anmeldung beschrieben (prioritätsbegründende Anmeldung DE 10 2009 033 246).

Bezüglich des Systems sei angemerkt, dass das Gateway nicht als separate Komponente ausgeführt sein muss. Es genügt vielmehr, dass die Funktion des Gateways vorhanden ist, nämlich das Auslesen des Zählerstands aus dem Stromzähler und das Übermitteln der Daten an den Energiedaten-Server. Diese Funktionalität kann auch in dem Stromzähler implementiert sein. Wenn ein separat ausgebildetes Gateway vorhanden ist, können mit diesem Gateway mehrere Stromzähler verbunden sein. Das Gateway übernimmt dann die Kommunikation für mehrere Stromzähler und sendet die Daten für alle angeschlossenen Zähler an den Energiedaten-Server.

Im Ergebnis stehen dem Energiekunden durch die Erfindung Informationen über den aktuellen Verlauf des Energieverbrauches mit keiner oder einer sehr geringen zeitlichen Verzögerung zur Verfügung. Es wird eine vergleichsweise einfache Möglichkeit geboten, durch Zu- oder Abschalten von Verbrauchern deren Energieaufnahme zu überprüfen und Geräte mit hohem Energiebedarf zu identifizieren.

Nachfolgend werden anhand eines Ausführungsbeispiels einzelne Aspekte der Erfindung nochmals verdeutlicht:
Ein marktüblicher elektronischer Stromzähler wird - gegebenenfalls unter Zwischenschalten eines Gateways - über seine Standardschnittstelle von einem Server in regelmäßigen, sehr kurzen Abständen ausgelesen und die Daten in einer Datenbank abgelegt. Diese Daten werden von einem zweiten (Web-)Server (gegebenenfalls auch integriert in den ersten Server) so aufbereitet, dass sie auf einer Webseite als graphische Verlaufskurve dargestellt werden können. Die Auslesung der Daten durch den ersten Server erfolgt in hoher Frequenz, jedoch nicht permanent. Vielmehr wird die Echtzeitauslesung durch den Kunden über die besagte Web-Seite initiiert.

Die Echtzeitauslesung des Zählers wird vom Kunden gestartet und läuft nur so lange wie der Kunde die Auslesung aufrecht erhält (aktiv oder passiv). Die Grafik auf der Webseite wird regelmäßig, in sehr kurzen Zeiträumen aktualisiert und zeigt auch Daten, die beim Starten der Anzeige noch nicht auf dem Server vorhanden waren, sondern während der Laufzeit vom Zähler gemessen und vom Server ausgelesen wurden.

Dem Kunden werden die Echtzeitdaten auf einem handelsüblichen PC mit Internetzugang dargestellt. Proprietäre Endgeräte sind nicht erforderlich. Weiterhin ist es für den Kunden möglich, Verbrauchsverläufe auf seinem Rechner zu speichern oder/und sie zur Analyse an den Energieversorger oder einen Energieberater zu übergeben oder sie diesem schon auf dem Server zu überlassen.

Dem Nutzer der Erfindung wird eine genaue Identifikation von "Energiefressern" ermöglicht. Teure Inhouse-Display werden nicht mehr benötigt. Dennoch erhält der Nutzer in Echtzeit Informationen über den aktuellen Energieverbrauch.

Das erfindungsgemäße System ist einfach erweiterbar und/oder updatebar.

Das Erfassen der Daten wird unmittelbar vor dem Beginn des Anzeigens vom Nutzer initiiert. Die Anzeige bezieht sich nicht - zumindest nicht ausschließlich - auf historische Daten, sondern auf solche Daten, die zum Zeitpunkt des Einschaltens noch nicht in der Datenbank vorhanden sind. Der Nutzer bekommt seine Daten über einen handelsüblichen Webbrowser angezeigt. Die dargestellten aktuellen Verbrauchsdaten können durch historische Daten ergänzt werden und dem Kunden gemeinsam mit den aktuellen Verbrauchsdaten in einem Diagramm dargestellt werden.

In einer bevorzugten Ausgestaltung der Erfindung erfasst ein elektronischer Zähler den aktuellen Stromverbrauch. Ein Gateway, der mit dem Zähler über eine Schnittstelle verbunden ist, liest den Zählerstand aus. Dies erfolgt in vorgegebenen Zeitabständen, vorzugsweise periodisch, wobei die Periodendauer an die jeweiligen Anforderungen angepasst sein kann (kurze Periodendauer (bis hinunter in den Sekundenbereich) bei der Erfassung des aktuellen Verbrauchs, längere Periodendauern (bis zu einer Stunde und darüber hinaus) bei der Erfassung von historischen Verbrauchsverläufen).

Der Gateway sendet die Daten an einen Energiedaten-Server oder wird in regelmäßigen Abständen von dem Energiedaten-Server abgefragt. Der Server ist mit dem Gateway vorzugsweise über ein Breitband-Powerline (BPL)-Netzwerk verbunden. Andere breitbandige Netzwerke, wie DSL, können statt BPL zum Einsatz kommen. Meist dürfte eine derzeit weit verbreitete IP-Verbindung verwendet werden. Der Server befindet sich außerhalb des Gebäudes des Kunden.

### Polling:

Über die IP-Verbindung mit dem Gateway werden die Daten von dem Energiedaten-Server in sehr schneller Folge aus dem Zähler ausgelesen. Die Folge richtet sich nach den Möglichkeiten der Schnittstelle zwischen Zähler und Gateway und wird sich in der Regel zwischen 1 und 10 Sekunden bewegen (falls möglich sogar unter einer Sekunde). Der Energiedaten-Server kennt die Schnittstelle zwischen Zähler und Gateway und konfiguriert die Abfragegeschwindigkeit entsprechend den Möglichkeiten. Es ist auch denkbar, dass der Energiedaten-Server während der ersten Ablesung die Performance des Zählers "lernt".

### Pushing:

Der Energiedaten-Server konfiguriert den Zähler so, dass die Daten in regelmäßigen Abständen und sehr schneller Folge in Abhängigkeit der Leistungsfähigkeit es Zählers vom Zähler automatisch gesendet werden (push).

Die Daten auf dem Energiedaten-Server werden an einen Web-Server übertragen, wobei der Web-Server in dem Energiedaten-Server integriert sein kann. Der Kunde meldet sich am Web-Server mit Benutzerkennung und Passwort an. Er aktiviert dann die Echtzeitanzeige. In einem entsprechenden Bereich wird dann eine neue Grafik generiert, die in regelmäßigen Abständen aktualisiert wird. Die Grafik könnte mit Werten starten, die aus historischen Daten aufgebaut ist.

### Vorteile der Erfindung:

- Realisierung von Echtzeitdarstellung auf standardisierten Webseiten und anderen flexiblen webbassierten Formaten
- Keine zusätzliche meistenteils proprietäre Endgeräte erforderlich (bspw. Inhouse-Displays)
- Identifikation von "Energiefressern" durch den Endkunden
- Das erfindungsgemäße System ist im Sinne der angezeigten Daten einfach erweiterbar und updatebar.

Es gibt nun verschiedene Möglichkeiten, die Lehre der vorliegenden Erfindung in vorteilhafter Weise auszugestalten und weiterzubilden. Dazu ist einerseits auf die dem Anspruch 1 bzw. 10 nachgeordneten Ansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigt die einige
- Fig.: ein Ausführungsbeispiel eines erfindungsgemäßen Systems zur Durchführung eines erfindungsgemäßen Verfahrens.

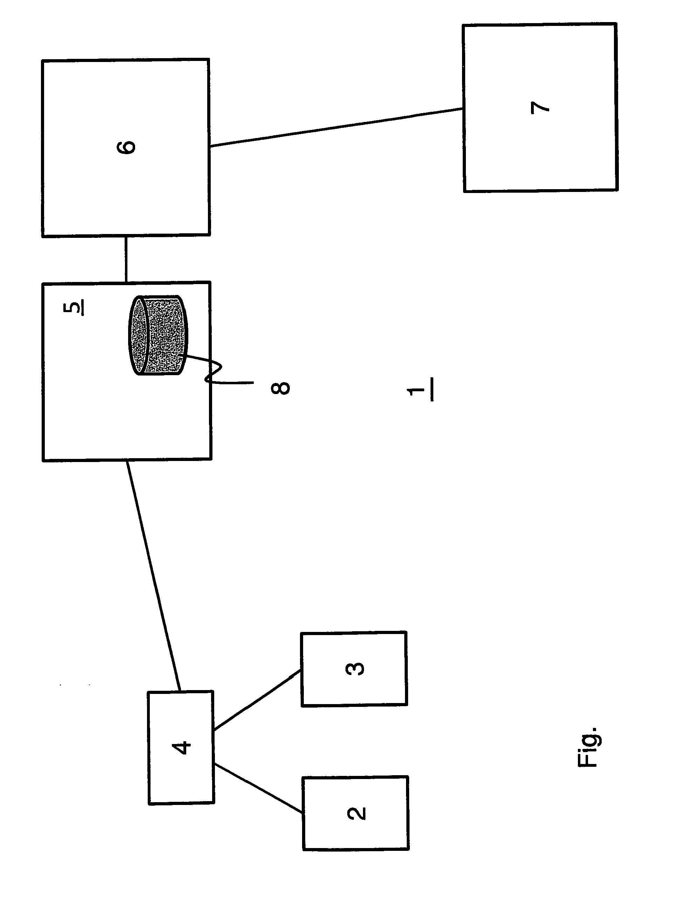

Die einzige Fig. 1 zeigt ein erfindungsgemäßes System, das in der dargestellten Ausführungsform aus den folgenden Komponenten besteht:
- Endgerät (z.B. PC des Endkunden, Handy, Pocket PC...)
   zur Anzeige der Verbrauchsdaten. Das Endgerät weist einen Internetanschluss und einen Webbrowser auf.
- Energiedaten-Server
   ist für die Kommunikation zum Sensor (im implementierten Fall der Smart-Meter) verantwortlich.
- Zweiter Server
   ist ein Web-Server, der den Kunden Zugang zur Verfügung stellt.
- Datenbank
   Daneben kann abhängig von der Implementierung eine Datenbank benötigt werden. In diese schreibt der Energiedaten-Server die eingehenden Sensordaten. Der Web-Server liest die Daten aus, um diese im Kundeninterface bereitzustellen. Bei einer anderen Implementierung werden die eingehenden Sensordaten direkt ohne Zwischenspeicherung in einer Datenbank dem Web-Server zur Verfügung gestellt.
- Gateway
   Das Gateway stellt mindestens zwei Schnittstellen zur Verfügung. Mit einer IP-basierten Schnittstelle kommuniziert es über eine breitbandige Anbindung mit dem Energiedaten-Server. Die Anbindung der verschiedenen Sensoren (z.B. Smart Meter) sind über weitere kabellose oder kabelgebundene, auf unterschiedlichen Protokollen basierende Schnittstellen realisiert. Das Gateway regelt die Kommunikation zwischen Energiedaten-Server und Sensoren. Je nach Ausführung und Einsatzgebiet können mehrere Sensoren an das Gateway angebunden sein.
- Sensor
   für unterschiedliche Messgrößen, die über definierte Protokolle kommunizieren können. In der aktuellen Implementierung kommen kommunikationsfähige Verbrauchszähler zum Einsatz, die mit Hilfe des Gateways ausgelesen werden.

Die Kommunikationsinfrastruktur besteht aus verschiedenen Verbindungen zwischen den einzelnen Komponenten. Das Endgerät muss über einen Internetzugang verfügen, der technisch auf unterschiedlichen Wegen realisiert sein kann. In Frage kommt unter anderem DSL, BPL oder GSM/UMTS.

Die Verbindung zwischen Gateway und Server ist breitbandig realisiert, um eine schnelle Übermittlung von Daten mehrerer Sensoren gleichzeitig gewährleisten zu können.

Die Kommunikation zwischen Gateway und Sensor wird in der Regel über einen Daten-Bus realisiert. Das kleinstmögliche Intervall zwischen zwei Sensor-Auslesungen wird im Allgemeinen durch die Leistungsfähigkeit der Sensor-Schnittstelle limitiert und kann in der Regel zwischen 1 und 10 Sekunden betragen. Bei bestimmten kabellosen Protokollen können nicht-technische Anforderungen das Intervall weiter vergrößern.

Im Betrieb erfolgt die Ablesung des/der Zähler 2, 3 über das Gateway 4 vom Energiedaten-Server 5 aus. Der Energiedaten-Server 5 initiiert die Ablesung in festen Intervallen. Gängig und vom Standard vorgesehen ist eine 15 minütige Auslesung. Der Energiedaten-Server 5 speichert die erhaltenen Werte nach erfolgreicher Ablesung in einer Datenbank 8. Ein Web-Server 6, der wie beschrieben ggf. im Energiedaten-Server integriert sein kann, ist in der Lage auf die Datenbank 8 zuzugreifen. Der Web-Server 6 bereitet die Daten für den Nutzer auf und präsentiert sie in übersichtlicher Form. Meist ist hier eine grafische Verbrauchsanzeige interessant, da sie den Energieverbrauch erheblich transparenter macht. Um die Erfindung vom gängigen System zu differenzieren, ist festzuhalten, dass durch diese ausschließlich historische Werte dargestellt werden können. Wie bereits erwähnt, ist der aktuellste Wert in einem System, das neue Werte sofort darstellt, im ungünstigsten Fall 15 Minuten alt. Viele Systeme stellen die Werte jedoch nicht sofort dar. Daher sind die aktuellsten Verbrauchscharts und Werte häufig einige Stunden alt.

Im Unterschied dazu initiiert der Kunde durch den Aufruf des Echtzeit-Anzeigeszenariums eine Ablesung mit einem Ableseintervall im Sekundenbereich. Hierdurch wechselt der Ablesemodus des Zählers von der 15-minütigen Auslesung (Standard-Anzeigeszenarium) in die Ablesung im Sekundenbereich (Echtzeit-Anzeigeszenarium), und der Nutzer kann im Browser den eigenen Energieverbrauch und die Änderungen des Energieverbrauchs live mitverfolgen. Die Anzeige kann mit historischen Daten starten und führt das Verbrauchsdiagramm dann mit den aktuellen, soeben abgelesenen Werten fort. Es ist vorstellbar, dass der Kunde seine Waschmaschine einschaltet, während er die Live Anzeige laufen lässt. Ein weiteres Szenario ergibt sich, wenn der Kunde seinen Kühlschrank ausschaltet, während er die Anzeige beobachtet. Dies eröffnet ihm die Möglichkeit, relativ einfach den Verbrauch einzelner Geräte zu bestimmen und "Energiefresser" im Haushalt zu identifizieren und in einem zweiten Schritt zu reduzieren.

Zwei verschiedene Verfahren für die Kommunikation mit dem Stromzähler sind vorstellbar:

### Polling:

Die Daten werden in sehr schneller Folge von dem Energiedaten-Server über das Gateway 4 vom Zähler 2, 3 ausgelesen. Wie geschildert wird die Geschwindigkeit wesentlich durch die Verbindung zwischen Gateway 4 und Zähler 2, 3 bestimmt. Der Energiedaten-Server 5, der die Abfrage durchführt, kennt die Schnittstelle und kann das Abfrageintervall entsprechend festlegen. Alternativ könnte der Server die Performance nach der ersten Abfrage messen und für zukünftige Abfragen verwenden.

### Pushing:

Der Energiedaten-Server 5 konfiguriert den Zähler 2, 3 so, dass die Daten in sehr schneller, regelmäßiger Folge gesendet werden. Diese Konfiguration erfolgt bei der Aktivierung der Live-Anzeige. Die Zeitintervalle sind, wie beim Polling von der Performance der Schnittstelle zwischen Zähler 2, 3 und Gateway 4 abhängig.

Als weiteres Feature der Erfindung kann der Kunde Verbrauchsverläufe lokal abspeichern. Dies eröffnet die Option die Verbrauchsverläufe an einen Energieberater weiterzugeben oder diese ihm schon auf dem Server zu überlassen. Gerade durch die Errechnung des Verbrauchs von Einzeigeräten, gibt es die Möglichkeiten einer Amortisationsrechnung für die Anschaffung eines neuen Gerätes mit geringerem Energieverbrauch.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Patentansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: System
- 2: elektronischer Stromzähler (SmartMeter)
- 3: elektronischer Stromzähler (SmartMeter)
- 4: Gateway
- 5: Energiedaten-Server
- 6: zweiter Server (Web-Server)
- 7: Benutzer-Endgerät
- 8: Datenbank

## Patentansprüche

1. Verfahren zum Darstellen von Informationen über den Energieverbrauch eines Nutzers, umfassend die Schritte:
Auslesen eines elektronischen Stromzählers (2, 3) bei dem Nutzer zum Ermitteln von Daten über den Energieverbrauch,
Übermitteln der Daten über den Energieverbrauch an einen Energiedaten-Server (5),
Übermitteln der durch den Energiedaten-Server (5) empfangenen Daten an einen zweiten Server (6) und Aufbereiten der Daten durch den zweiten Server (6) und
Übermitteln der aufbereiteten Daten an ein Endgerät (7) bei dem Nutzer und Darstellen der aufbereiteten Daten auf dem Endgerät (7),
wobei das Auslesen des Stromzählers (2, 3) mit einer einstellbaren Häufigkeit erfolgt und wobei die Häufigkeit des Auslesens in Abhängigkeit eines durch den Nutzer gewählten Anzeigeszenariums eingestellt wird.

2. Verfahren nach Anspruch 1, **dadurch gekennzeichnet, dass** die Daten über den Energieverbrauch periodisch durch den Energiedaten-Server (5) abgefragt werden (Poll).

3. Verfahren nach Anspruch 1, **dadurch gekennzeichnet, dass** die Daten über den Energieverbrauch durch ein Gateway (4) periodisch an den Energiedaten-Server (5) gesendet werden (Push), wobei die Daten durch das Gateway (4) von dem Stromzähler (2, 3) abgefragt werden.

4. Verfahren nach einem der Ansprüche 1 bis 3, **dadurch gekennzeichnet, dass** die bei dem Energiedaten-Server (5) empfangenen Daten durch den Energiedaten-Server (5) aufbereitet und abgespeichert werden.

5. Verfahren nach einem der Ansprüche 1 bis 4, **dadurch gekennzeichnet, dass** die Daten in einem Standard-Anzeigeszenarium mit einer Periodenlänge zwischen 1 min und 30 min, bevorzugter Weise zwischen 10 min bis 20 min, ganz besonders bevorzugter Weise mit einer Periodenlänge von 15 min zu dem Energiedaten-Server (5) übermittelt werden.

6. Verfahren nach einem der Ansprüche 1 bis 5, **dadurch gekennzeichnet, dass** die Daten in einem Echtzeit-Anzeigeszenarium mit einer Periodenlänge unterhalb von einer Minute, bevorzugter Weise mit einer Periodenlänge zwischen 1 sec und 10 sec zu dem Energiedaten-Server (5) übermittelt werden.

7. Verfahren nach einem der Ansprüche 1 bis 6, **dadurch gekennzeichnet, dass** bei Initiieren eines Anzeigeszenariums der Energiedaten-Server (5) durch den zweiten Server (6) zur Konfiguration der Übermittlung der Daten von dem Stromzähler (2, 3) veranlasst wird, so dass die Daten über den Energieverbrauch mit der zu dem jeweiligen Anzeigeszenarium hinterlegten Periodenlänge ausgelesen und übermittelt werden.

8. Verfahren nach einem der Ansprüche 1 bis 7, **dadurch gekennzeichnet, dass** bei Aufbereitung der Daten durch den zweiten Server (6) die Daten in eine grafische Darstellung, vorzugsweise in Form eines Diagramms, transformiert werden.

9. Verfahren nach einem der Ansprüche 1 bis 8, **dadurch gekennzeichnet, dass** die bei dem Endgerät (7) empfangenen aufbereiteten Daten mittels eines Web-Browsers auf dem Endgerät (7) dargestellt werden.

10. System zum Darstellen von Informationen über den Energieverbrauch eines Nutzers, insbesondere zur Durchführung eines Verfahrens nach einem der Ansprüche 1 bis 9, umfassend:
einen elektronischen Stromzähler (2, 3) zum Erfassen von Daten über den Energieverbrauch des Nutzers,
ein Gateway (4), das zum Auslesen von Daten aus dem Stromzähler (2, 3) und zum Weiterleiten von Daten in ein vorzugsweise breitbandiges Netzwerk ausgestaltet ist,
einen Energiedaten-Server (5), der zum Empfangen der von dem Gateway (4) weitergeleiteten Daten ausgebildet ist,
einen zweiten Server (6), der zum Empfangen der bei den Energiedaten-Server (5) empfangenen Daten und zum Aufbereiten der von dem Energiedaten-Server (5) empfangenen Daten ausgestaltet ist, und
ein Endgerät (7), das zum Darstellen der durch den zweiten Server (6) aufbereiteten Daten ausgestaltet ist,
wobei die Häufigkeit des Auslesens des Stromzählers (2, 3) in Abhängigkeit eines von dem Nutzer gewählten Anzeigeszenariums einstellbar ist.

11. System nach Anspruch 10, **dadurch gekennzeichnet, dass** der zweite Server (6) ein Web-Server ist, der dem Endgerät (7) vorzugsweise dynamisch generierte Webseiten zur Verfügung stellt.
